Europäisches Patentamt

European Patent Office

Office européen des brevets

(19)

(11) **EP 0 653 237 B1**

(12) **EUROPÄISCHE PATENTSCHRIFT**

(45) Veröffentlichungstag und Bekanntmachung des
Hinweises auf die Patenterteilung:
**27.12.1996 Patentblatt 1996/52**

(21) Anmeldenummer: **94115280.3**

(22) Anmeldetag: **28.09.1994**

(51) Int. Cl.[6]: **B01D 53/56**, B01D 53/90,
B01D 53/94, B01D 53/30,
F01N 3/20, G01N 33/00,
G01N 27/12

(54) **Verfahren zur Verminderung der Stickoxidkonzentration im Abgas einer Brennkraftmaschine oder einer Verbrennungsanlage**

Process for reducing the concentration of nitrogen oxides in the exhaust gas of combustion engines or incinerators

Procédé de réduction de la concentration d'oxydes d'azote dans le gaz d'échappement provenant de moteurs à combustion ou d'incinérateurs

(84) Benannte Vertragsstaaten:
**CH DE FR IT LI NL SE**

(30) Priorität: **06.10.1993 DE 4334071**

(43) Veröffentlichungstag der Anmeldung:
**17.05.1995 Patentblatt 1995/20**

(73) Patentinhaber: **SIEMENS AKTIENGESELLSCHAFT
80333 München (DE)**

(72) Erfinder:
• **Dahlheim, Christian
D-14169 Berlin (DE)**
• **Fleischer, Maximilian, Dr.
D-85635 Höhenkirchen (DE)**
• **Meixner, Hans, Prof. Dr.
D-85540 Haar (DE)**

(56) Entgegenhaltungen:
EP-A- 0 362 483        WO-A-91/19975
DE-A- 4 227 741        DE-C- 4 217 552
US-A- 4 751 054

• SENSORS AND ACTUATORS, Bd.19, Nr.3, September 1989, LAUSANNE CH Seiten 259 - 265, XP000047321 TATSUMI ISHIHARA ET AL. 'The Mixed Oxide Al2O3-V2O5 as a Semiconductor Gas Sensor for NO and NO2'
• DATABASE WPI Section Ch, Week 9211, Derwent Publications Ltd., London, GB; Class E35, AN 92-085478 & JP-A-4 029 049 (TOTO KK) 31. Januar 1992
• DATABASE WPI Section Ch, Week 8821, Derwent Publications Ltd., London, GB; Class J04, AN 88-142900 & JP-A-63 083 652 (TOSHIBA KK) 14. April 1988
• DATABASE WPI Section Ch, Week 7850, Derwent Publications Ltd., London, GB; Class E31, AN 78-90665A & JP-A-53 129 098 (HITACHI KK) 10. November 1978

EP 0 653 237 B1

Printed by Rank Xerox (UK) Business Services
2.13.10/3.4

## Beschreibung

Die Erfindung betrifft Verfahren zur Verminderung der Stickoxidkonzentration im Abgas einer Brennkraftmaschine oder einer Verbrennungsanlage gemäß dem Oberbegriff von Anspruch 1.

Die Stickoxid- und Partikelemissionen (Staub) eines auf Leistung und Verbrauch optimierten Dieselmotors lassen sich durch verbrennungstechnische Maßnahmen nur noch unwesentlich verringern. Um auch die in Zukunft vom Gesetzgeber vorgeschriebenen Abgasgrenzwerte einhalten zu können, ist eine Nachbehandlung der dieselmotorischen Abgase daher unumgänglich.

Eine deutliche Verringerung der $NO_x$-Emission eines Dieselmotors läßt sich durch Anwendung des sogenannten Selective-Catalytic-Reduction-Verfahrens erreichen. Beim SCR-Verfahren wird gasförmiges Ammoniak $NH_3$, Ammoniak in wässriger Lösung oder Harnstoff als Reduktionsmittel in das Abgassystem eingespritzt, so daß an einem Katalysator insbesondere die chemischen Reaktionen

$$4NO + 4NH_3 + O_2 \rightarrow 4N_2 + 6H_2O$$

$$2NO_2 + 4NH_3 + O_2 \rightarrow 3N_2 + 6H_2O$$

ablaufen können. Zur Reduktion von 1 Mol $NO_x$ im dieselmotorischen Abgas benötigt man etwa 0,9 bis 1,1 Mol $NH_3$. Wird weniger Ammoniak NH3 eingespritzt, arbeitet der Katalysator nicht mehr mit dem höchsten Wirkungsgrad. Eine Überdosierung ist ebenfalls zu vermeiden, da ansonsten unverbrauchtes Ammoniak NH3 in die Atmosphäre gelangt.

Das aus der DE-A-36 10 364 bekannte SCR-Verfahren kann den NOx-Anteil im Abgas von Feuerungsanlagen um mehr als 80 % reduzieren und gleichzeitig den $NH_3$-Ausstoß auf unter 5 ppm begrenzen. Die Dosierung des Reduktionsmittels überwacht ein Rechner, der das Ausgangssignal eines im Abgastrakt hinter dem $NO_x$-Konverter angeordneten $NH_3$-Sensors bewertet und die Reduktionsmittelzufuhr durch Ansteuerung einer Fördereinheit ggf. nachregelt. Als $NH_3$-Sensor dient eine elektrochemische Zelle, die als wesentliche Komponente einen aus stabilisiertem Zirkondioxid gefertigten becherförmigen Körper enthält. Auf dem Festelektrolyten sind zwei Elektroden aufgebracht, wobei die dem Abgas ausgesetzte äußere Elektrode beispielsweise aus $TiO_2$, Pt $V_2O_5$ oder $V_2O_5$ und die einem Referenzgas (Luft) ausgesetzte innere Elektrode aus Platin besteht.

Das in der DE 36 06 535 beschriebene Verfahren zur Verringerung der $NO_x$-Konzentration nutzt die hohen Temperaturen des Abgases, um das in fester oder flüssiger Form vorliegende Reduktionsmittel zu verdampfen und in reaktive Komponenten aufzuspalten. Nach erfolgter Konzentration werden die reaktiven Komponenten über ein Bündel von Rohrleitungen in eine vergleichsweise kühle Zone des Abgastraktes eingespritzt, wo sie mit den Stickoxiden zu Stickstoff, Wasser und Kohlendioxid reagieren. Ein nach dem Chemilumineszenz-Vergleichsverfahren arbeitender Sensor dient der Messung der $NO_x$-Konzentration. Sein Ausgangssignal wird einem Regler mit Sollwertvorgabe zugeführt, der den Stellmotor eines Dosierventils ansteuert.

Ziel der Erfindung ist die Schaffung eines Verfahrens, mit dem sich die Konzentration von Stickoxiden $NO_x$ im Abgas einer Brennkraftmaschine oder einer Verbrennungsanlage deutlich verringern läßt. Es soll insbesondere gewährleistet sein, daß das Abgas weder Stickstoffmonoxid NO noch überschüssigen Ammoniak $NH_3$ enthält. Diese Aufgaben werden erfindungsgemäß durch ein Verfahren nach Patentanspruch 1 gelöst.

Der mit der Erfindung erzielbare Vorteil besteht insbesondere darin, daß man die für eine stöchiometrische Umsetzung von Stickstoffmonoxid NO zu Stickstoff $N_2$ und Wasser $H_2O$ erforderliche $NH_3$-Menge in einfacher Weise durch Messung des elektrischen Widerstands eines dem Abgas ausgesetzten Sensorelements, bevorzugt einer Vanadatschicht, bestimmen kann. Eine Absolutmessung der NO- bzw. $NH_3$-Konzentration ist nicht erforderlich. Da Regelziel ein maximaler Widerstand der als Sensorelement verwendeten Metalloxidschicht ist, bereitet eine eventuell vorhandene Widerstandsdrift keine Probleme.

Die abhängigen Ansprüche betreffen vorteilhafte Weiterbildungen und Ausgestaltungen der im folgenden anhand der Zeichnungen erläuterten Erfindung. Hierbei zeigt:

| | |
|---|---|
| Fig. 1 | eine mit einem SCR-Katalysator ausgestattete Abgasanlage eines Dieselmotors |
| Fig. 2 und 3 | den schematischen Aufbau eines NO/$NH_3$-Detektors |
| Fig. 4 | die Kammelektroden des NO/$NH_3$-Detektors |
| Fig. 5 | Verfahrensschritte zur Herstellung der Kammelektroden |
| Fig. 6 | eine auf den Kammelektroden abgeschiedene $Al_2O_3$-$V_2O_5$-Sandwich-Struktur |
| Fig. 7 bis 11 | die Sensitivität einer $AlVO_4$-Dünnschicht auf Stickstoffmonoxid NO, Ammoniak $NH_3$ und andere Gase |
| Fig. 12 | ein Ausführungsbeispiel eines Detektorgehäuses |
| Fig. 13 | ein das Verfahren zur Regelung der eingespritzen Harnstoffmenge erläuternden Ablaufplan |
| Fig. 14 | den elektrischen Widerstand einer Vanadatschicht in einem Stickstoffmonoxid NO und Ammoniak $NH_3$ enthaltenden Gasgemisch in Abhängigkeit von der Menge des dem Gasgemisch zugesetzten Ammoniaks $NH_3$ |

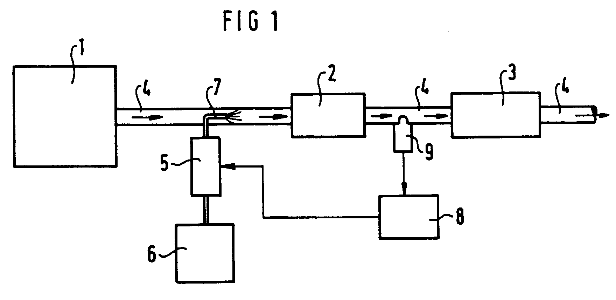

Die in Fig. 1 schematisch dargestellte Abgasanlage eines Dieselmotors 1 soll die während des Betriebs entstehenden Stickoxide NOx weitgehend abbauen und die verbleibenden Restgase möglichst geräuscharm an die Atmosphäre abgeben. Sie besteht aus einem beispielsweise in /1/ und /2/ beschriebenen SCR-Katalysator 2, einem oder mehreren Schaltdämpfern 3 und einem Rohrsystem 4, das die einzelnen Komponenten mit den im Zylinderkopf des Dieselmotors 1 vorhandenen Abgasaustrittsöffnungen verbindet. Dem SCR-Katalysator 2 vorgelagert ist eine Dosiereinrichtung 5, die das in einem Vorratsbehälter 6 gelagerte Reduktionsmittel in den Abgastrakt einspritzt. Die Dosiereinrichtung 5 enthält insbesondere eine mit einer Einspritzdüse 7 verbundene Membranpumpe oder ein Einspritzventil mit vorgeschaltetem Durchflußmesser. Eine Steuereinheit 8 sorgt dafür, daß dem Abgas eine bestimmte Menge des ammoniakhaltigen Reduktionsmittels zugeführt werden kann.

Als Reduktionsmittel kommt insbesondere eine wässrige Harnstofflösung $(CO(NH_2)_2)$ in Betracht. Diese wird unter Wärmezufuhr zu Kohlendioxid $CO_2$ und Ammoniak $NH_3$ zerlegt, wobei das Ammoniak $NH_3$ auf der Oberfläche des Katalysators 2 adsorbiert und mit den im Abgas vorhandenen Stickoxiden NO und $NO_2$ zu den ungiftigen Stoffen Stickstoff $N_2$ und Wasser $H_2O$ reagiert. Um sicherzustellen, daß das in die Umgebung gelangende Dieselabgas weder Stickstoffmonoxid NO noch überschüssiges Ammoniak $NH_3$ enthält, muß die Reaktion

$$4NH_3 + 4NO + O_2 \rightarrow 4N_2 + 6H_2O$$

stöchiometrisch ablaufen. Erfindungsgemäß wird deshalb die NO- bzw. $NH_3$-Konzentration mit Hilfe eines im Abgasrohr 4 hinter dem SCR-Katalysator 2 angeordneten Detektors 9 gemessen und zur Steuerung der eingespritzten Harnstoffmenge herangezogen. Die für eine stöchiometrische Reaktion erforderliche Harnstoffmenge wird aufgrund der noch zu beschreibenden Eigenschaften des Detektors dann eingespritzt, wenn der elektrische Widerstand einer als NO- bzw. $NH_3$-sensitives Element verwendeten Vanadatschicht ein Maximum bzw. deren elektrische Leitfähigkeit ein Minimum durchläuft.

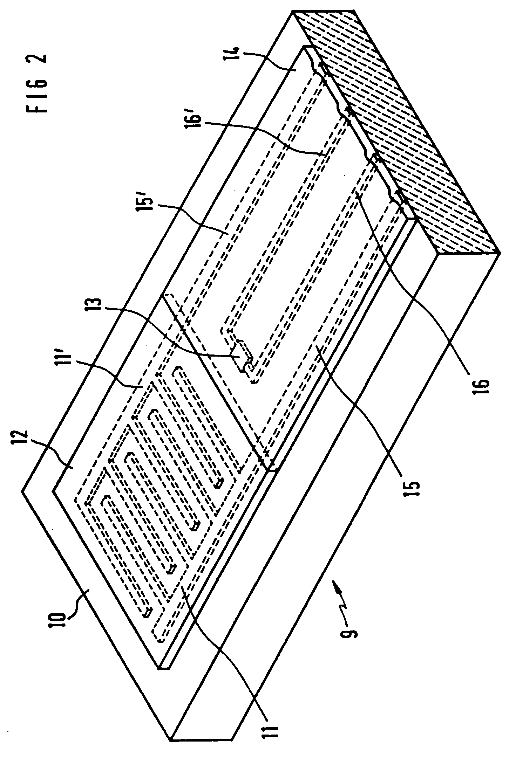

Das Substrat 10 des in den Figuren 1 und 2 dargestellten Detektors 9 besteht aus einem elektrisch isolierenden Material wie Glas, Berylliumoxid BeO, Aluminiumoxid $Al_2O_3$ oder Silizium (mit $Si_3N_4/SiO_2$-Isolation). Auf dem zwischen 0,1 und 2 mm dicken Substrat 10 sind zwei eine Interdigitalstruktur bildende Platinelektroden 11, 11', eine diese Elektroden leitend verbindende Vanadatschicht 12($AlVO_4$ oder $FeVO_4$) als $NH_3$- bzw. NO- empfindliches Element sowie ein Temperaturfühler 13 angeordnet. Die mit 14 bezeichnete Passivierungsschicht aus Siliziumoxid schirmt die den beiden Kammelektroden 11, 11' und dem Temperaturfühler 13 jeweils zugeordneten Anschlußleitung 15, 15' bzw. 16, 16' vor dem im Abgas vorhandenen Sauerstoff ab.

Um die gewünschte Betriebstemperatur von bis zu 600 °C einstellen und unabhängig von äußeren Einflüssen konstant halten zu können, wird der Detektor 9 mit Hilfe einer auf der Rückseite des Substrats 10 angeordneten Widerstandsschicht aktiv beheizt. Die in Fig. 2 mit 17 bezeichnete Widerstandsschicht besteht beispielsweise aus Platin (Pt), Gold (Au) oder einer elektrisch leitfähigen Keramik und besitzt eine mäanderförmige Struktur. Dargestellt ist auch die etwa 10 bis 100 nm dicke und aus Titan (Ti), Chrom (Cr), Nickel (Ni) oder Wolfram (W) bestehende Metallschicht 18, die die Haftung zwischen dem Substrat 10 und den Platinelektroden 11, 11' verbessert.

Die Abmessungen der Kammelektroden 11 und 11' hängen vom spezifischen Widerstand der darüber aufgebrachten Sensorschicht 12 im gewünschten Temperaturbereich ab. So kann die Kammstruktur 11, 11' beispielsweise Dicken von 0,1 bis 10 µm, Breiten von 1 bis 1000 µm und Elektrodenabstände von 1 bis 100 µm aufweisen. Für eine 1 µm dicke $AlVO_4$-Schicht 12 führen die folgenden Abmessungen zu gut meßbaren spezifischen Widerständen im Temperaturbereich zwischen 500 und 600 °C: Elektrodendicke D = 1,5 µm, Länge der Interdigitalstruktur L = 1 mm, Elektrodenabstand S = 50 µm.

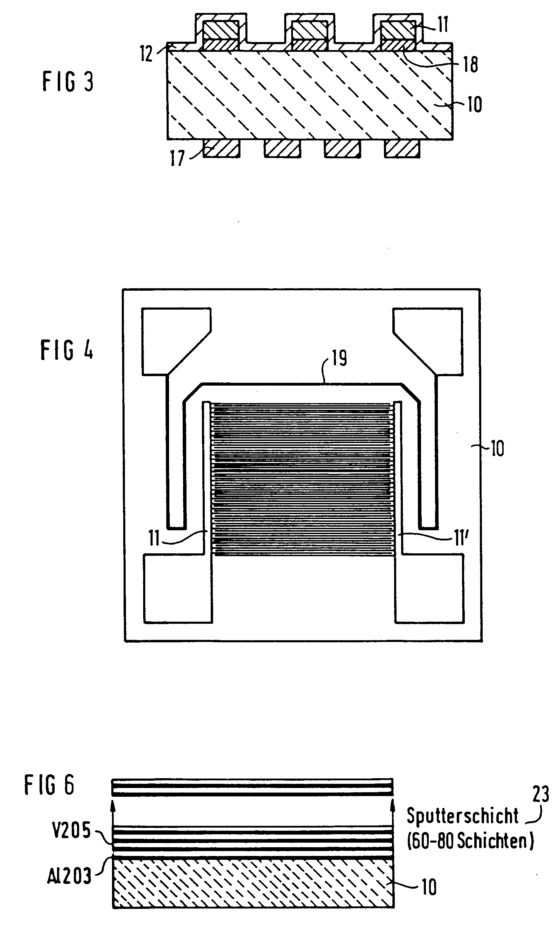

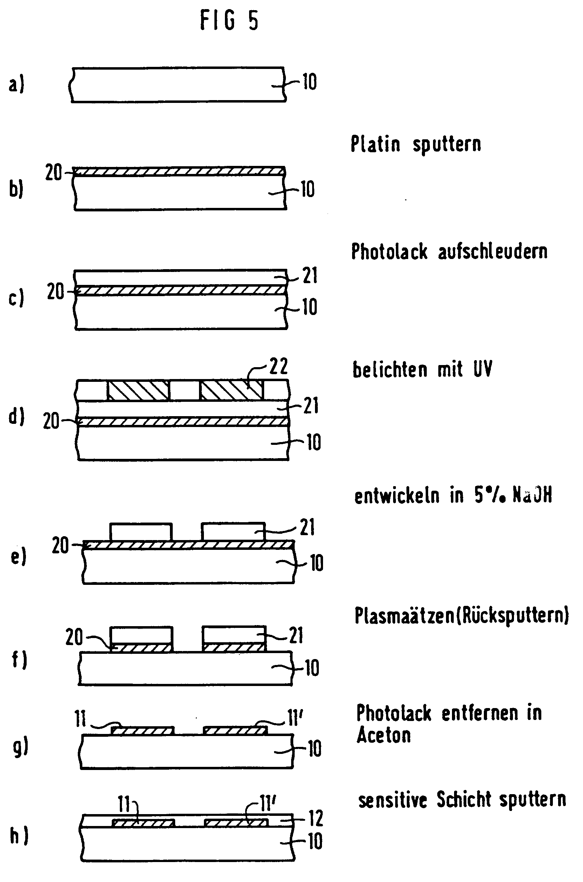

Die Figur 4 zeigt eine maßstabsgetreue Abbildung einer Interdigitalstruktur in Draufsicht. Als Temperaturfühler findet bei diesem Ausführungsbeispiel eine aus Platin bestehende Widerstandsschicht 19 Verwendung. Zur Herstellung der Kammelektroden 11, 11' wird zunächst eine 1,5 µm dicke Platinschicht 20 auf dem beheizten Korundsubstrat 10 in einer Sputteranlage abgeschieden (s. Figur 5a, b). Die Strukturierung der Schicht 20 erfolgt in einem positiv-Fotoschritt, bei dem man den Fotolack 21 am Ort der zu erzeugenden Elektroden aufbringt und durch eine Maske 22 belichtet (s. Figur 5c, d, e). Der entwickelte Fotolack 21 schützt die Platinschicht 20 während des nachfolgenden Ätzschritts (s. Figur 5f). Nach dem Entfernen des Fotolacks 21 mit Azeton erhält man die gewünschten Kammelektroden 11 und 11' (s. Figur 5g) auf der anschließend die gassensitive Vanadatschicht 12 abgeschieden wird (s. Figur 5h).

Die Verwendung von Gold Au anstelle von Platin Pt als Elektrodenmaterial hat keinen Einfluß auf die Gasempfindlichkeit des $Al_2O_3/V_2O_5$-Mischoxids.

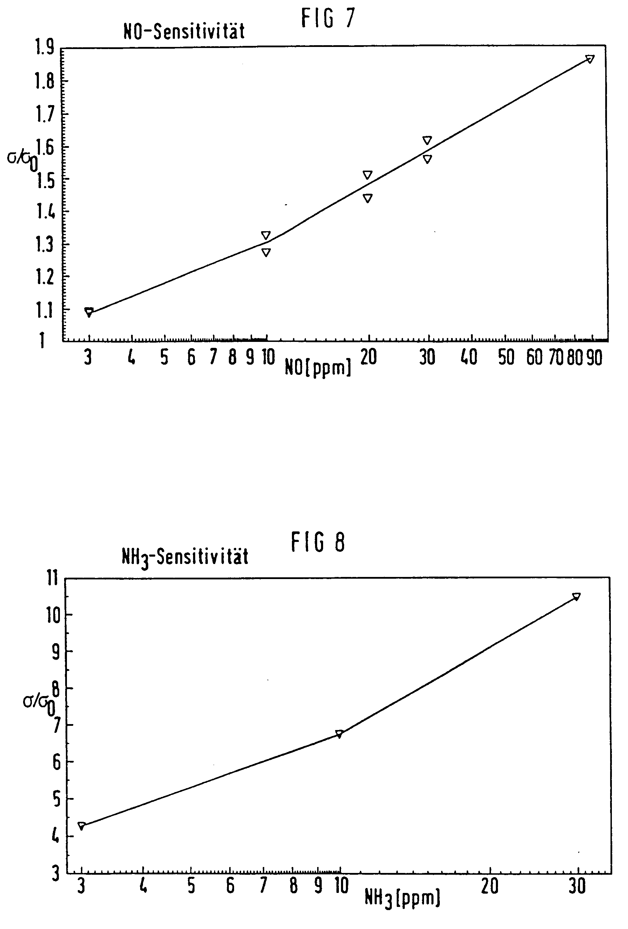

Die außergewöhnlichen Eigenschaften des Detektors beruhen auf dem bei der Herstellung der gassensitiven Schicht 12 anzuwendenden Sputterverfahren und der sich daran anschließenden Temperung. Die Beschichtung der Kammelektroden 11, 11' kann man beispielsweise in der Sputteranlage Z490 von Leybold vornehmen. Als Ausgangsmaterialien dienen metallisches Vanadium (V) und Aluminium (Al), die reaktiv, d. h. in einem aus 80 % Argon und 20 % Sauerstoff bestehenden Plasma von entsprechenden Targets zerstäubt werden und sich auf dem beheizten Substrat 10 niederschlagen. Durch abwechselndes Zerstäuben der beiden Targets baut sich die in Fig. 6 dargestellte Sandwich-Struktur 23 auf. Sie hat eine Dicke von etwa 1 μm und besteht aus jeweils 60 bis 80 etwa 10 bis 15 nm dicken $V_2O_5$- bzw. $Al_2O_3$-Schichten, wobei der $Al_2O_3$-Anteil 50% bis maximal 70% beträgt. Die Sputterparameter sind in der folgenden Tabelle angegeben.

| Restgasdruck | ca. 2 - 4 x $10^{-6}$ mbar |
|---|---|
| Sputtergasdruck | 4,2 x $10^{-3}$ mbar |
| Sputtergas | 20% $O_2$/80% Ar |
| DC-Potential | Al-Target: 155 V |
| | V-Target : 225 V |
| Substrattemperatur | ca. 250°C |

Um ein homogenes Mischoxid zu erzeugen, wird die Sandwich-Struktur 23 in einem Hochtemperaturofen an Luft etwa 5 bis 15 Stunden getempert. Die Ofentemperatur hat hierbei einen entscheidenden Einfluß auf die Topographie und die Phase der $Al_2O_3$/$V_2O_5$-Schichten. Eine optimale Sensitivität für Ammoniak $NH_3$ und Stickstoffmonoxid NO zeigen Schichten, die bei Temperaturen T zwischen 550 °C $\leq$ T $\leq$ 610 °C getempert wurden und aus gleichen Anteilen von $V_2O_5$ und $Al_2O_3$ bestehen. Durch das Tempern entsteht das für die hohe Gasempfindlichkeit verantwortliche Aluminiumvanadat $AlVO_4$. Die maximale Arbeitstemperatur der Vanadatschicht liegt bei etwa 600 °C. Aluminiumvanadat $AlVO_4$ besitzt eine trikline Einheitszelle mit a = 0,6471 nm, b = 0,7742 nm, c = 0,9084 nm, $\alpha$ = 96,848 A, $\beta$ = 105,825 A und $\chi$ = 101,399 A, deren Volumen V = 0,4219 $nm^3$ beträgt.

Schichten mit einem $Al_2O_3$-Anteil von mehr als 50 % zeigen einen etwas kleineren Meßeffekt. Man kann sie allerdings auch bei höheren Temperaturen von bis zu 680 °C noch einsetzen.

Die folgenden Diagramme sollen die Empfindlichkeit bzw. Sensitivität der nach dem beschriebenen Verfahren hergestellten $AlVO_4$-Dünnschichten auf verschiedene Gase dokumentieren. Aufgetragen ist jeweils die Größe $\sigma/\sigma_0$ ($\sigma_0$: Leitfähigkeit der sensitiven Schicht in synthetischer Luft (80 % $N_2$/20 % $O_2$)) in Abhängigkeit von der Zeit t bzw. der Konzentration des jeweiligen Gases.

Bereits die Anwesenheit kleinster Mengen von Stickstoffmonoxid NO und Ammoniak $NH_3$ in trockener synthetischer Luft führt zu einem deutlichen Anstieg der Leitfähigkeit des Aluminiumvanadats $AlVO_4$ (s. Fig. 7 und 8). So ändert sich die Leitfähigkeit um etwa 75 %, wenn man der Luft 10 ppm Stickstoffmonoxid NO beimischt. Die Zugabe von 10 ppm Ammoniak $NH_3$ hat eine Erhöhung der Leitfähigkeit um mehr als ein Faktor 6 zur Folge.

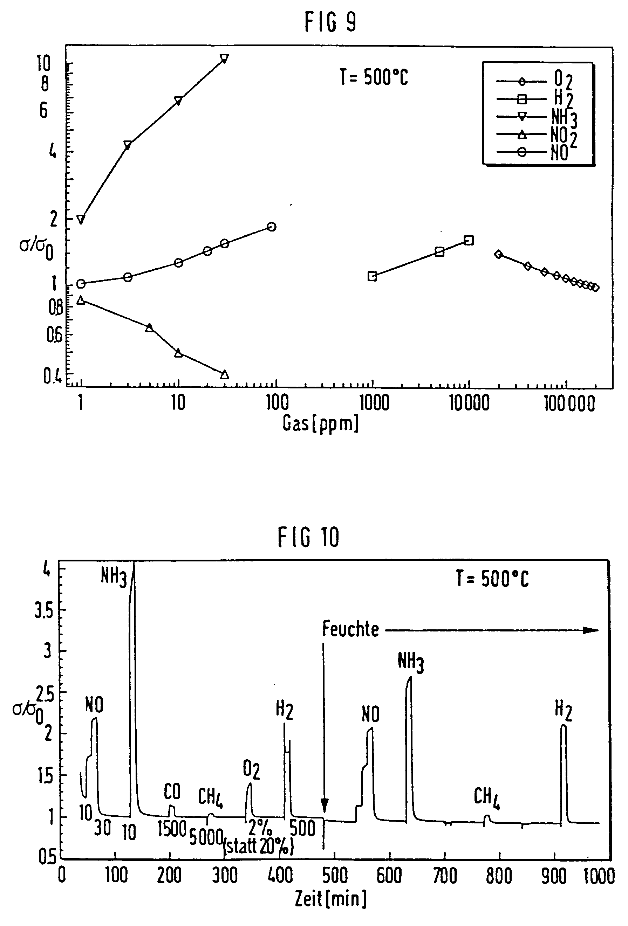

Wie die Fig. 9 zeigt, erhöht sich der spezifische Widerstand der $AlVO_4$-Dünnschicht bei Anwesenheit von Stickstoffdioxid $NO_2$. Da das Aluminiumvanadat

gegenüber Stickstoffmonoxid NO ein völlig anderes Verhalten zeigt (Verringerung des spezifischen Widerstandes, s. Fig. 7), kann man beide Stickoxide eindeutig voneinander unterscheiden, sofern nur eines der beiden Stickoxide mit dem sensitiven Element wechselwirkt.

Außer auf Stickstoffmonoxid NO und Ammoniak $NH_3$ spricht die Vanadatschicht auch auf Änderungen des Sauerstoffpartialdrucks und Wasserstoff $H_2$ an (s. Fig. 9). Die Querempfindlichkeit auf Sauerstoff $O_2$ und Wasserstoff $H_2$ ist allerdings erheblich kleiner als die Reaktion auf Stickstoffmonoxid NO und Ammoniak $NH_3$. So haben 500 ppm Wasserstoff $H_2$ in Luft annähernd dieselbe Änderung der Leitfähigkeit zur Folge wie die Zugabe von 10 ppm Stickstoffmonoxid NO. Nicht nachweisbar sind die Gase Kohlenmonoxid CO (bis 1500 ppm), Methan $CH_4$ (bis 5000 ppm) und Kohlendioxid $CO_2$ (bis 1 %) bis zu den in den Klammern jeweils angegebenen Konzentrationen. In einem feuchten Gasgemisch (80 mbar $H_2O$) beobachtet man eine deutliche Abnahme der $NH_3$-Sensitivität; sie bleibt aber immer noch doppelt so groß wie die Empfindlichkeit für Stickstoffmonoxid NO (s. den rechten Teil der Fig. 10).

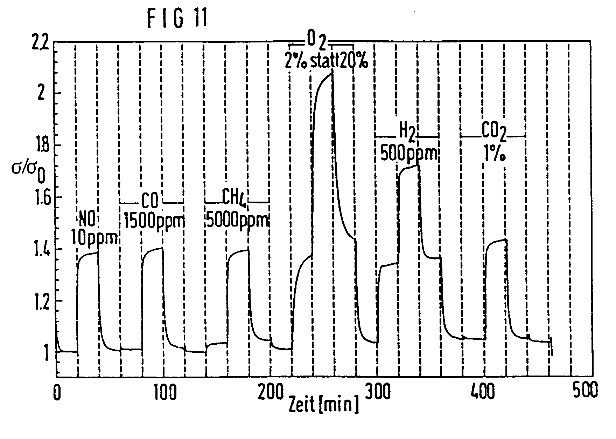

In Fig. 11 ist die Empfindlichkeit der $AlVO_4$-Dünnschicht in feuchter Luft (80 mbar $H_2O$) bei 500 °C und einem NO-Anteil von 10 ppm dargestellt. Innerhalb der jeweils durch eine waagrechte Linie markierten Zeitintervallen wurde der feuchten Luft ein weiteres Gas in der angegebenen Konzentration beigemischt. Die Luft enthielt also beispielsweise zwischen der 60. und der 120. Minute 1500 ppm Kohlenmonoxid CO und zwischen der 80. und der 100. Minute zusätzlich noch 10 ppm Stickstoffmonoxid NO. Wie die Meßergebnisse zeigen, wird die NO-Empfindlichkeit der $AlVO_4$-Schicht durch die Anwesenheit von Kohlenmonoxid CO, Methan $CH_4$ und Kohlendioxid $CO_2$ nicht beeinflußt. Die Beimischung von Wasserstoff $H_2$ bewirkt zwar keine Maskierung der NO-Sensitivität, es ist aber eine eindeutige Querempfindlichkeit festzustellen. Einen ähnlichen Effekt beobachtet man bei Sauerstoff $O_2$, wenn sich dessen Konzentration von 20 % auf 2 % verringert.

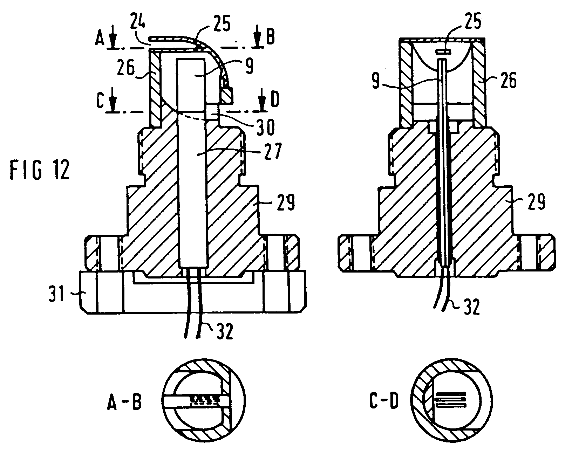

Das in Fig. 12 dargestellte Edelstahlgehäuse dient dem Einbau des Detektors 9 in die Wandung des Abgasrohrs 4. Das Gehäuse besteht aus zwei Teilen, wobei der eine Gaseintrittsöffnung 24 und einen Metallsteg 25 aufweisende Gehäusekopf 26 auf dem mit einer Bohrung 27 zur Aufnahme des Detektors 9 versehenen Grundkörper 29 befestigt ist. Vor dem Verschweißen der beiden Teile 26 und 29 wird der Detektor 9 in der Bohrung 27 des Grundkörpers 29 verklebt. Nach der Montage befindet sich das sensitive Element in einem S-förmig gekrümmten Strömungskanal, der die Gaseintrittsöffnung 24 mit der Gasaustrittsöffnung 30 verbindet. Im linken Teil der Fig. 12 ist zusätzlich auch die die Bohrung 27 des unteren Gehäuseteils 29 abschließende Keramikplatte 31 gezeigt. Sie enthält mehrere Kanäle, durch die man die der Kontaktierung des Detektors 9 dienenden Anschlußdrähte 32 nach außen führt.

Mit Hilfe des oben beschriebenen NO/$NH_3$-Detektors 9 läßt sich ein einfaches und effektives Verfahren zur Regelung der Harnstoffeinspritzung in den SCR-Katalysator 2 verwirklichen. Da der Detektor 9 sowohl auf Stickstoffmonoxid NO als auch auf Ammoniak $NH_3$ mit einer Erhöhung der Leitfähigkeit reagiert (vgl. die Fig. 7 und 8) kann man zunächst nicht entscheiden, welches der beiden Gase mit der sensitiven Schicht 12 wechselwirkt. Wie anhand des in Fig. 13 dargestellten Ablaufplans zu erkennen ist, wird die Steuereinheit 8 die Dosiereinrichtung 5 veranlassen, zunächst mehr Harnstoff in das Abgas einzuspritzen. Führt diese Maßnahme zu einer Erhöhung des Sensorwiderstands, so kann das Stickstoffmonoxid NO noch nicht vollständig zu Stickstoff $N_2$ und Wasser $H_2O$ umgesetzt worden sein. Die eingespritzte Harnstoffmenge wird nun solange erhöht, bis der Sensorwiderstand den in Fig. 14 durch einen Pfeil gekennzeichneten Maximalwert erreicht und das den Katalysator 2 verlassende Abgas weder Stickstoffmonoxid NO noch überschüssiges Ammoniak $NH_3$ enthält.

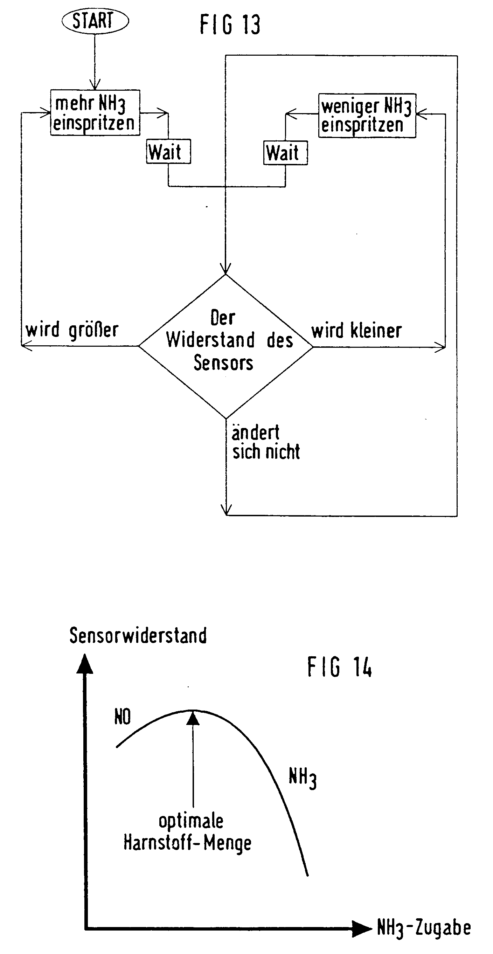

Führt die Mehreinspritzung von Harnstoff hingegen zu einem kleineren Sensorwiderstand, muß der $NH_3$-Überschuß im Abgas durch Verringerung der Harnstoffmenge abgebaut werden (s. rechter Teil des Ablaufplans). Im Diagramm der Fig. 14 nähert man sich dem die optimale Harnstoffmenge definierenden Maximalwert des Sensorwiderstands daher von rechts.

Die Erfindung beschränkt sich selbstverständlich nicht auf die beschriebenen Ausführungsbeispiele. So ist es beispielsweise möglich, einen zweiten Detektor auf der Basis gesputterter $Al_2O_3/V_2O_5$-Schichten im Abgastrakt vor der Einspritzdüse 7 anzuordnen. Dieser Detektor dient dann vorzugsweise der Überwachung der beschriebenen Regelung, indem man die NO-Konzentration mißt und mit der jeweils eingespritzten Harnstoffmenge vergleicht. Die $NH_3$-Empfindlichkeit des Detektors wirkt sich hierbei nicht störend aus, da das Motorabgas vor der Einspritzdüse 7 kein Ammoniak $NH_3$ enthält.

Als Reduktionsmittel kommen anstelle von Harnstoff auch Ammoniak in wässriger Lösung oder gasförmiges Ammoniak in Betracht, wobei man das Reduktionsmittel auch direkt in den SCR-Katalysator 2 einspritzen kann.

Das erfindungsgemäße Verfahren läßt sich selbstverständlich auch in sogenannten DeNO$_x$-Anlagen zur Rauchgasentstickung anwenden (s. beispielsweise /3/).

Literatur:

/1/ Motortechnische Zeitschrift 49 (1988) 1, S. 17 bis 21
/2/ Motortechnische Zeitschrift 54 (1993) 6, S. 310 bis 315
/3/ Umwelt, 1986 No. 1, Fachreport Rauchgasreinigung, FR 19 bis FR 25

**Patentansprüche**

1. Verfahren zur Verminderung der Stickoxidkonzentration im Abgas einer Brennkraftmaschine oder einer Verbrennungsanlage bei dem dem Abgas ein ammoniakhaltiges Reduktionsmittel zugesetzt wird und bei dem Stickoxide in einer vom Abgas durchströmten Katalysatoreinheit (2) zu Stickstoff und Wasser umgesetzt werden,
   **dadurch gekennzeichnet,**

   - daß ein sowohl auf Stickstoffmonoxid als auch auf Ammoniak mit einer Erhöhung der Leitfähigkeit reagierendes erstes Sensorelement (12) im Abgasstrom hinter der Katalysatoreinheit (2) angeordnet wird,
   - daß der von der Stickstoffmonoxid- und Ammoniak-Konzentration abhängige Widerstand oder die elektrische Leitfähigkeit des Sensorelements (12) gemessen werden und
   - daß dem Abgas eine solche Menge des Reduktionsmittels zugesetzt wird, bei der der elektrische Widerstand des Sensorelements (12) am größten bzw. die elektrische Leitfähigkeit am kleinsten ist.

2. Verfahren nach Anspruch 1,
   **dadurch gekennzeichnet,**
   daß dem Abgas gasförmiges Ammoniak, Ammoniak in wässriger Lösung oder Harnstoff als Reduktionsmittel zugesetzt wird.

3. Verfahren nach Anspruch 1 oder 2,
   **dadurch gekennzeichnet,**
   daß der elektrische Widerstand oder die elektrische Leitfähigkeit eines aus einer Metalloxid-Vanadiumoxid-Mischung bestehenden Sensorelements (12) gemessen wird.

4. Verfahren nach Anspruch 3,
   **dadurch gekennzeichnet,**
   daß der elektrische Widerstand oder die elektrische Leitfähigkeit eines aus einer Aluminiumoxid-Vanadiumoxid-Mischung oder einer Eisenoxid-Vanadium-Mischung bestehenden Sensorelements (12) gemessen wird.

5. Verfahren nach einem der Ansprüche 1 bis 4,
   **dadurch gekennzeichnet,**
   daß der elektrische Widerstand oder die elektrische Leitfähigkeit eines aus einem Vanadat MeVO$_4$ bestehenden Sensorelements (12) gemessen wird, wobei Me ein dreiwertiges Metall bezeichnet..

6. Verfahren nach Anspruch 5,
   **dadurch gekennzeichnet,**
   daß der elektrische Widerstand oder die elektrische Leitfähigkeit eines aus Aluminium- oder Eisenvanadat bestehenden Sensorelements (12) gemessen wird.

7. Verfahren nach einem der Ansprüche 1 bis 6, **dadurch gekennzeichnet,** daß ein schichtförmig ausgebildetes und durch ein Elektrodenpaar (11, 11') kontaktiertes Sensorelement (12) verwendet wird.

8. Verfahren nach einem der Ansprüche 1 bis 7, **dadurch gekennzeichnet,** daß das Sensorelement (12) aktiv beheizt und auf einer konstanten Temperatur gehalten wird.

9. Verfahren nach einem der Ansprüche 1 bis 8, **dadurch gekennzeichnet,** daß ein dem ersten Sensorelement (12) entsprechendes zweites Sensorelement im Abgasstrom vor der Katalysatoreinheit (2) angeordnet und zur Messung der Stickstoffmonoxid-Konzentration herangezogen wird.

**Claims**

1. Process for reducing the concentration of nitrogen oxides in the exhaust gas of combustion engines or incinerators, in which an ammonia-containing reducing agent is added to the exhaust gas and in which nitrogen oxides are converted to nitrogen and water in a catalyst unit (2) with exhaust gas flowing through it, characterized in

   - that a first sensor element (12) which reacts both to nitrogen monoxide and to ammonia with an increase in conductivity is disposed in the exhaust gas stream downstream of the catalyst unit (2),
   - that the resistance dependent on the nitrogen monoxide concentration and ammonia concentration or the electrical conductivity of the sensor element (12) is measured, and
   - that an amount of reducing agent is added to the exhaust gas which is such that the electrical resistance of the sensor element (12) is a maximum or the electrical conductivity is a minimum.

2. Process according to Claim 1, characterized in that gaseous ammonia, ammonia in aqueous solution or urea is added to the exhaust gas as reducing agent.

3. Process according to Claim 1 or 2, characterized in that the electrical resistance or the electrical conductivity is measured of a sensor element (12) composed of a metal oxide/vanadium oxide mixture.

4. Method according to Claim 3, characterized in that the electrical resistance or the electrical conductivity is measured of a sensor element (12) composed of an aluminium oxide/vanadium oxide mixture or an iron oxide/vanadium oxide mixture.

5. Process according to one of Claims 1 to 4, characterized in that the electrical resistance or the electrical conductivity is measured of a sensor element (12) composed of a vanadate $MeVO_4$, where Me denotes a trivalent metal.

6. Process according to Claim 5, characterized in that the electrical resistance or the electrical conductivity is measured of a sensor element (12) composed of aluminium vanadate or iron vanadate.

7. Process according to one of Claims 1 to 6, characterized in that a sensor element (12) is used which has a layer-type structure and is contacted by an electrode pair (11, 11').

8. Process according to one of Claims 1 to 7, characterized in that the sensor element (12) is actively heated and kept at a constant temperature.

9. Process according to one of Claims 1 to 8, characterized in that a second sensor element corresponding to the first sensor element (12) is disposed in the exhaust gas stream upstream of the catalyst unit (2) and is used to measure the nitrogen monoxide concentration.

**Revendications**

1. Procédé pour diminuer la concentration en oxydes d'azote à l'échappement d'un moteur à combustion interne ou d'une installation d'incinération, dans le cas duquel on ajoute aux gaz d'échappement un moyen de réduction contenant de l'ammoniaque et dans le cas duquel les oxydes d'azote sont transformés en azote et en eau dans une unité de catalyseur (2) traversée par les gaz d'échappement, caractérisé

   - en ce qu'un premier élément de détection (12), réagissant aussi bien au monoxyde d'azote qu'à l'ammoniaque par une élévation de la conductibilité, est disposé dans le courant des gaz d'échappement, derrière l'unité de catalyseur (2),
   - en ce qu'on mesure la résistance dépendant de la concentration en monoxyde d'azote et en ammoniaque, ou la conductibilité électrique, de l'élément de détection (12), et
   - en ce qu'on ajoute aux gaz d'échappement une quantité de moyen de réduction telle que la résistance électrique de l'élément de détection (12) soit la plus grande, ou que la conductibilité électrique soit la plus petite possible.

2. Procédé suivant la revendication 1, caractérisé en ce que de l'ammoniac gazeux, de l'ammoniaque en solution aqueuse ou de l'urée est ajouté comme moyen de réduction.

3. Procédé suivant la revendication 1 ou la revendication 2, caractérisé en ce qu'on mesure la résistance électrique ou la conductibilité électrique d'un élément de détection (12) constitué d'un mélange oxyde métallique-oxyde de vanadium.

4. Procédé suivant la revendication 3, caractérisé en ce qu'on mesure la résistance électrique ou la conductibilité électrique d'un élément de détection (12), constitué d'un mélange oxyde d'aluminium-oxyde de vanadium ou d'un mélange oxyde de fer-oxyde de vanadium.

5. Procédé suivant l'une des revendications 1 à 4, caractérisé en ce qu'on mesure la résistance électrique ou la conductibilité électrique d'un élément de détection (12), constitué d'un vanadate $MeAlVO_4$, où Me désigne un métal trivalent.

6. Procédé suivant la revendication 5, caractérisé en ce qu'on mesure la résistance électrique ou la conductibilité électrique d'un élément de détection (12), constitué d'un vanadate d'aluminium ou de fer.

7. Procédé suivant l'une des revendications 1 à 6, caractérisé en ce qu'on utilise un élément de détection (12), réalisé sous la forme de couches et en contact avec une paire d'électrodes (11, 11').

8. Procédé suivant l'une des revendications 1 à 7, caractérisé en ce que l'élément de détection (12) est chauffé de façon active et est maintenu à une température constante.

9. Procédé suivant l'une des revendications 1 à 8, caractérisé en ce qu'un deuxième élément de détection est disposé dans le courant des gaz d'échappement, en amont de l'unité de catalyseur (2), et est affecté à la mesure de la concentration en monoxyde d'azote.

# FIG 1

FIG 2

FIG 3

FIG 4

FIG 6

V2O5

Al2O3

Sputterschicht 23
(60-80 Schichten)

# FIG 5

a)    10

Platin sputtern

b)    20    10

Photolack aufschleudern

c)    20    21    10

belichten mit UV

d)    22    21    20    10

entwickeln in 5% NaOH

e)    20    21    10

Plasmaätzen(Rücksputtern)

f)    20    21    10

Photolack entfernen in Aceton

g)    11    11'    10

sensitive Schicht sputtern

h)    11    11'    12    10

FIG 7

NO-Sensitivität

FIG 8

NH$_3$-Sensitivität

# FIG 9

# FIG 10

FIG 11

FIG 12

A-B

C-D

FIG 13

FIG 14